# EUROPEAN PATENT SPECIFICATION

(11) **EP 3 917 879 B1**
(45) Date of publication and mention of the grant of the patent: **28.06.2023**
(21) Application number: 21718091.8
(22) Date of filing: 08.04.2021
(51) Int. Cl.: C01B 32/19, C01B 32/198, D21D 1/20, D21D 1/30

(54) **MANUFACTURE OF TWO-DIMENSIONAL MATTER**
HERSTELLUNG VON ZWEIDIMENSIONALEM MATERIAL
FABRICATION DE MATIÈRE BIDIMENSIONNELLE

(30) Priority: 09.04.2020 SE 2050411
(43) Date of publication of application: 08.12.2021
(73) Proprietor: 2D FAB AB, 853 50 Sundsvall (SE)
(72) Inventor: FORSBERG, Sven, 856 31 Sundsvall (SE); BÄCK, Roland, 862 40 Njurunda (SE)
(74) Representative: Ström & Gulliksson AB
(86) International application number: PCT/EP2021/059185
(87) International publication number: WO 2021/204946

(56) References cited:
- WO-A1-2017/033005
- US-A1- 2014 131 489
- US-A1- 2014 217 218
- US-A1- 2017 240 428

## Description

### Technical field

The present invention is directed to methods for producing two-dimensional matter from a three dimensional material, such as for example producing graphene from graphite.

### Background

Graphene, one of many two-dimensional materials, has many unique properties regarding for instance thermal and electrical conductivity as well as mechanical properties. It is thus desired to manufacture graphene efficiently in a large scale at a reasonable cost.

US 20,277 from 1858 discloses a machine for the manufacture and sizing of pulp, that is constructed of a single conical grinder and outer shell, and with pipes for the introduction of the rags and the size and the education of both arranged with reference to the axis and ends of the grinder substantially in manner and so as to enable the grinder to operate to reduce the rags to pulp and mix the sizing therewith.

WO 2014/140324 discloses a process for exfoliating a 3-dimensional material to produce a two-dimensional material, comprising mixing the 3-dimensional material in a liquid, applying shear force to exfoliate the 3-dimensional material and produce dispersed exfoliated two-dimensional material in solution. A number of additives are disclosed to help the dispersed exfoliated two-dimensional material to remain free and unaggregated in solution.

WO 2014/001519 discloses a different approach for exfoliating a 3-dimenisonal layered material to produce a two-dimensional material, comprising the steps of mixing the layered material in a solvent; applying energy, for example ultrasound, to said mixture, and removing the energy applied to the mixture, such that sedimentation of the two-dimensional material out of solution as a weakly re-aggregated, exfoliated two-dimensional material is produced.

WO 2017/025926 discloser yet another approach for the production of graphene or graphene-like material, comprising the following steps: providing particles of a crystalline graphitic material; dispersing the particles of the crystalline graphitic material in a solvent or surfactant mixture; submitting the mixture to a cavitation force such that cavitation bubbles are present; and submitting the mixture to high shear. The cavitation step and the high shear agitation step are preferably simultaneous, in particular in the same enclosed vessel.

WO 2017/158334 discloses a method for the production of a two-dimensional material in the form of nanoplatelets with the steps: (a) providing liquid medium comprising a deep eutectic solvent and a Group I or II metal in which a two-dimensional precursor material has been suspended; (b) providing a source of mechanical energy; (c) applying mechanical energy to the liquid media for a period of time to generate a suspension of two-dimensional material; wherein the source of energy is operative to provide energy to the system by the action of shear force and friction and wherein the period of time for which the mechanical energy is applied to the liquid media is 30 hours or less. As an example a ball mill is mentioned.

US 9,267,234 discloses a refiner for refining fibrous material, where blade element has a refining surface with bars provided with refining grits.

US 2016/185603 discloses the use of ball mills in largescale production of for instance graphene.

Ball mills have the drawback of applying a pressure on the material, which is less preferred, since it has a tendency to compress the material.

US 2017/334728 discloses a method of industrial graphene oxide production comprising: placing graphite into water containing and an oxidizing agent, wherein said oxidizing agent has an oxidation potential less than 2V to oxidize the graphite; mechanically exfoliating the graphite into graphene
oxide flakes; and separating the graphene oxide flakes from the water, wherein the graphene oxide flakes are substantially flat. Examples of the exfoliation are in a stirred media mill such as an attrition mill, a dry grind attritor, a wet grind attritor, a regular speed attritor, and
a high speed attritor or a attritor.

WO 2019/095012 discloses a method for producing nanostructured materials in a thin film reactor from starting material of inorganic or organic material of layered or two dimensional (2D) structure or inorganic material transformed
in situ into 2D material, and a solvent: or liquid phase. The TFR can be a device with spaced first and second fluid contact surfaces, which can be conical, for relative rotation to generate shear stress in the thin film therein between.

US 2017/240428 A1 discloses a method for preparing a 2D material comprising selecting a fluid and using a filtration device. The fluid can comprise a 3D material from which the 2D material is derived, for instance graphite in the case of producing graphene.

US 2014/217218 A1 discloses a so-called refiner with refining grits having a size or diameter of between 3 and 700 micrometers.

US 2014/131489 A1 discloses a refining system and process using a specially designed stator refiner plate that includes a major refining surface comprising a series of bars and grooves, the bars include a leading surface that comprises an irregular surface hosting a series of protrusions extending along the bar, and a trailing surface that is relatively smooth compared to the leading surface that lacks an irregular surface.

US 2017/033005 A1 discloses a method of manufacturing a semiconductor device having a plurality of guard rings.

Even if there are methods used today for the manufacture of graphene there is still room for an improvement and a need for an improved method for manufacturing of graphene, in particular at large scale.

### Summary

It is an object of the present invention to obviate at least some of the disadvantages in the prior art and provide an improved method of manufacturing graphene and other two-dimensional matter.

In a first aspect there is provided a device for manufacturing of a two-dimensional material comprising two opposing surfaces adapted to moving relative to each other,
wherein the two surfaces are arranged so that there is a space between the two surfaces,
wherein at least one of the two surfaces comprise grooves and bars of a first type, on the surface(s) facing the space,
wherein at least a part of the surface of the bars of the first type facing the space is provided with an abrasive surface, wherein 25-75 % of the area of the abrasive surface consists of protrusions wherein the protrusions have a height in the interval 10-30 µm, where the height of the protrusions is measured as the height along a surface normal, wherein the abrasive surface has at least 600 protrusions per cm²,
wherein at least half of the grooves comprise at least one bar of a second type, where each bar of the second type extends across the groove.

In a second aspect there is provided a method for manufacturing a two-dimensional material comprising the steps of:
a) mixing a starting material with a liquid to form a suspension,
b) forcing the suspension to flow in a space between two opposing surfaces which two surfaces are moving relative to each other so that the suspension is subjected to a shear stress.

wherein at least one of the two surfaces comprise grooves and bars of a first type, on the surface(s) facing the space, wherein at least a part of the surface of the bars of the first type facing the space is provided with an abrasive surface, wherein 25-75 % of the area of the abrasive surface consists of protrusions wherein the protrusions have a height in the interval 10-30 µm, where the height of the protrusions is measured as the height along a surface normal, wherein the abrasive surface has at least 600 protrusions per cm²,
wherein at least half of the grooves comprise at least one bar of a second type, where each bar of the second type extends across the groove.

Further aspects and embodiments are defined in the appended claims, which are specifically incorporated herein by reference.

An advantage is that the present method provides larger pieces of graphene compared to for instance a ball mill according to the state of the art.

It is an advantage that a high shear force is provided to exfoliate the two-dimensional material (graphene) while only a low pressure is applied to the material.

Compared to methods for manufacturing graphene according to the state of the art the present disclosure provides a method with lower energy consumption per manufactured unit of graphene.

### Brief description of the drawings

Aspects and embodiments will be described with reference to the following drawings in which:

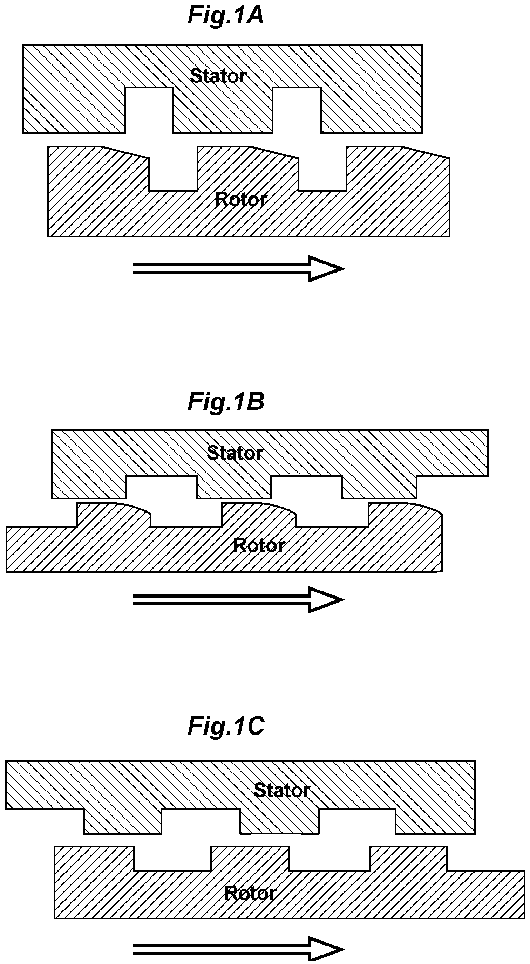

Figure 1a shows a schematic view of the two surfaces with a space in-between. In this particular embodiment one of the surfaces is rotating and the other one is fixed. The two surfaces are thus called rotor and stator respectively for this particular embodiment. It can be seen that the bars are tapered so that the space between the two surfaces is wider at one edge of the bar and narrower at the other edge of the bar. The edge of the bar with the wider distance is in this embodiment the leading edge of the bar in the direction of the movement of the surface.
Figure 1b shows an embodiment where the tapered part of the surface of the bars is rounded.
Figure 1c shows an embodiment without tapering and with straight edges.

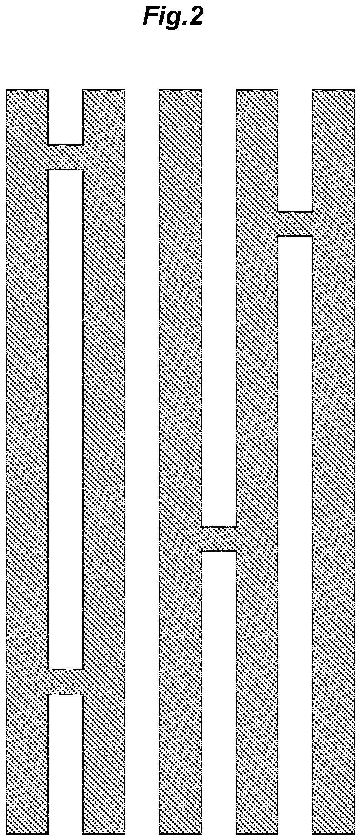

Figure 2 shows a view from above downwards towards the pattern of bars and groves. The first type of bars are vertical in fig 2 and the second type of bars are horizontal in fig 2. Between the bars there are grooves.

### Detailed description

Before the invention is disclosed and described in detail, it is to be understood that this invention is not limited to particular compounds, configurations, method steps, substrates, and materials disclosed herein as such compounds, configurations, method steps, substrates, and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

Graphene as used herein denotes a one-atom-thick planar sheet of sp2-bonded carbon atoms that are densely packed in a honeycomb crystal lattice or small stacks thereof.

Two-dimensional material as used herein denotes a material, which is only one or two atoms thick. It should however be noted that also material which is thicker is in general the result of the manufacturing process. For instance, there is the example of graphite being made into graphene. In such a process, the resulting end product will be some graphene together with some material comprising multiple graphene layers, but which is thinner than the starting material. Residual starting material, and starting material with reduced dimensions, may also be present in the finished product depending on the conditions.

In the first aspect there is provided a device for manufacturing of a two-dimensional material comprising two opposing surfaces adapted to moving relative to each other, wherein the two surfaces are arranged so that there is a space between the two surfaces, wherein at least one of the two surfaces comprise grooves and bars of a first type, on the surface(s) facing the space, wherein at least a part of the surface of the bars of the first type facing the space is provided with an abrasive surface, wherein 25-75 % of the area of the abrasive surface consists of protrusions wherein the protrusions have a height in the interval 10-30 µm, where the
height of the protrusions is measured as the height along a surface normal, wherein the abrasive surface has at least 600 protrusions per cm², wherein at least half of the grooves comprise at least one bar of a second type, where each bar of the second type extends across the groove.

The protrusions on at least a part of the surface of the bar, which surface face the space, act as an abrasive surface helping to create suitable shear forces for the suspension. The protrusions are in one embodiment grits attached to the surface. In an alternative embodiment, the protrusions are a knurled surface. In yet another embodiment, the protrusions are made by casting a surface blade of metal.

In one embodiment of the first aspect, the bars of the first type have a width of 5-20 mm measured as the shortest straight line from one edge of the bar to the other edge of the bar.

In one embodiment of the first aspect at least a part of the bars of the first type are tapered. In one embodiment of the first aspect the tapered part with the lowest height measured along a surface normal is the leading edge with respect to an intended relative movement between the two surfaces.

In one embodiment of the first aspect the distance between the bottom of the grooves and the top of the bars is in the range 0.1-10 mm, preferably 0.1-5 mm, wherein the distance is measured in a direction along a surface normal centered on the bar. In one embodiment the distance between the bottom of the grooves and the top of the bars is in the range 1-5 mm In one embodiment of the first aspect each groove comprises at least three bars of the second type.

In one embodiment of the first aspect, bars of the second type in adjacent grooves are positioned so that there is at least 50 mm distance between the bars of the second type in adjacent grooves. If the bars of the first type are 5-20 mm wide this ensure that the bars of the second type are positioned next to a gap in the adjacent groove. This ensures that several bars of the second type are not placed in a line seen in the direction of the movement of the surface and this ensures an improved turbulence.

In the second aspect there is provided a method for manufacturing a two-dimensional material comprising the steps of:
a) mixing a starting material with a liquid to form a suspension,
b) forcing the suspension to flow in a space between two opposing surfaces which two surfaces are moving relative to each other so that the suspension is subjected to a shear stress,
wherein at least one of the two surfaces comprise grooves and bars of a first type, on the surface(s) facing the space, wherein at least a part of the surface of the bars of the first type facing the space is provided with an abrasive surface, wherein 25-75 % of the area of the abrasive surface consists of protrusions wherein the protrusions have a height in the interval 10-30 µm, where the height of the protrusions is measured as the height along a surface normal, wherein the abrasive surface has at least 600 protrusions per cm², wherein at least half of the grooves comprise at least one bar of a second type, where each bar of the second type extends across the groove.

In one embodiment both of the two surfaces comprise grooves and bars of a first type, on the surfaces facing the space, wherein at least a part of the surface of the bars of the first type facing the space is provided with an abrasive surface. The embodiment where both surface comprise grooves and bars gives maximum turbulence and is efficient.

The two surfaces creating the space, where a liquid can flow are facing each other, while they still are able to move relative to each other, for instance by rotation one or both of the surfaces. The surfaces facing the space are also facing each other and both of the surfaces facing the space have bars and grooves.

The inventors have realized that to ensure an energy efficient manufacturing process the surface of the bars facing the liquid, i.e. facing the space between the surfaces, should be abrasive, i.e. with a high Ra value. The bars should also be wide, i.e. 5-20 mm. This creates a suitable shear force making it energy efficient.

The depth of the grooves should not be too deep, otherwise material will be stuck in the grooves so that it is not subjected to sufficient shear forces which would make it less efficient. A height difference between the bars and grooves is suitably in the interval 0.1-5 mm.

Further the inventors have found that a flow along the grooves may reduce the efficiency of the process because material flowing along the grooves is not sufficiently subjected to the exfoliating shear forces. In order to prevent flow along the grooves, at least half of the grooves are equipped with a bars of a second type placed across the groove so that a flow along the groove is prevented or at least restricted and so that any flow along the groove will be subjected to a shear force anyway. The width requirement of 5-20 mm does not apply to this second type of bars. The second type of bars extend across the groove so that an efficient restriction of the flow is achieved. One bar per groove gives an improvement, compared to no bar at all. Two bars or more per groove normally give even better effect. Typically, 3-4 bars per groove are suitable. Sometimes a higher number of bars of the second type per groove can be used.

The starting material is a material, which can be teared apart by shear stress and turbulent forces to become the two-dimensional material. During the step B) the suspension with the starting material is subjected to shear so that the material is teared apart to smaller pieces of material and eventually to a two-dimensional material. This process may be referred to as exfoliation. The process is normally run so that a certain fraction of the starting material becomes a two-dimensional material.

The suspension is pumped, i.e. forced in a narrow space between the two surfaces. At the same time the two surfaces are moving relative to each other. This creates a high shear force, which is able to exfoliate pieces of two-dimensional material form the starting material. Thus, the two-dimensional material is created from the starting material.

This procedure is more gentle and produces better graphene compared to other methods according to the prior art. A high shear force is provided to exfoliate the two-dimensional material while only a low pressure is applied to the material. Thus the process becomes energy efficient.

The two-dimensional material is recovered from the suspension. The process can be made batch-wise by adding a certain amount of starting material which is run and/or circulated until the desired result is achieved, or alternatively the process can be carried out continuously by adding starting material and removing suspension during the process.

In one embodiment, the starting material comprises graphite and the manufactured two-dimensional material is graphene.

In one embodiment, the starting material comprises of expanded graphite and wherein the manufactured two-dimensional material is graphene, at least a part of the material becomes graphene. Expanded graphite has the advantage that less shear force is needed to separate it into a two-dimensional material.

In one embodiment, the starting material comprises of oxidized graphite and wherein the manufactured two-dimensional material is graphene oxide.

In one embodiment, the suspension comprises at least one selected from the group consisting of water, ethanol, and acetone. In one embodiment the suspension comprises water and at least one solvent in an amount of 0-5 wt%.

In one embodiment, the suspension comprises at least one surfactant. A surfactant is a surface active agent which acts as a dispersant. A surfactant stabilizes the suspension and can also facilitate the exfoliation of material from the starting material.

In one embodiment, the suspension comprises at least one salt. This has the effect of increasing the ionic strength so that electrostatic forces in the material are affected and become weaker.

In one embodiment, the suspension comprises at least one polymer. A polymer can increase the viscosity.

In one embodiment the suspension comprises at least one selected from surfactans, polymers and salts.

The two surface can obtain their relative movement by moving both surfaces or by moving one of the surfaces.

In one embodiment, the two surfaces are shaped as two discs with a distance there between for the suspension. The space for the suspension is between the flat sides of the discs.

In one embodiment, the two surfaces are shaped as two concentric truncated cones with a distance there between for the suspension.

In one embodiment, step B) is performed in a conical refiner. A conical refiner is common within the pulp industry and by using a modified conical refiner it is possible to build a system with existing and well proven machinery.

In one embodiment, step B) is performed between two surfaces with rotational symmetry. An examples includes but is not limited to two surfaces shaped as half spheres with slightly different diameter so that there is a space between the two surfaces.

The two surface are arranged a distance from each other and the distance should be optimized for the application. If the distance is very short the shear force can become high which is desired, but on the other hand, the volume between the surfaces becomes very low so that the capacity decreases. If the distance is increased the shear force becomes lower, but the capacity increases. Thus, there is an optimum distance between the surfaces which will depend on the material and other conditions. In one embodiment, the minimum distance D_{MIN} between the two surfaces is in the interval 5-500 µm. In another embodiment, the minimum distance D_{MIN} between the two surfaces is in the interval 1-100 µm. In yet another embodiment, the minimum distance D_{MIN} between the two surfaces is in the interval 15-150 µm. In still another embodiment, the minimum distance D_{MIN} between the two surfaces is in the interval 1-10 µm.

In one embodiment, the surfaces are spaced apart with a distance, which becomes gradually smaller in the direction in which the suspension is forced to flow. By such an arrangement, the distance can be adapted to the decreasing size of the material in the machine.

In one embodiment, the suspension during step B) is subjected to a shear rate in the interval 10³-10⁸, preferably 10⁵-10⁶ s⁻¹.

The two surfaces are patterned with raised parts and lower parts, i.e. bars and grooves. The raised parts will be closer to the opposite surface compared to the lower parts. The surfaces are patterned with raised parts and lower parts and thus there will be a minimum distance between the two surfaces, when they are moved relative each other. This minimum distance is called D_{MIN}. The minimum distance D_{MIN} is measured when the two surfaces are mounted in the position used during operation. The minimum distance D_{MIN} may, depending on the pattern of the two surfaces vary when the two surfaces are moved relative each other. The minimum distance D_{MIN} is the minimum distance when the two surfaces are moved relative each other. The minimum distance during the entire movement is taken as the minimum distance. D_{MIN} is the minimum distance between the two surfaces, which are moving relative to each other measured at the point during movement where the distance is minimal. The protrusions on the top surfaces of bars are counted when considering the distance. Thus the protrusions are counted as a part of the bar when calculating both the height of the bar and the distance to the opposing surface.

In one embodiment, a large fraction of the surface is at the minimum distance D_{MIN} or at least close to the minimum distance D_{MIN} from the opposite surface.

In one embodiment, at least 20% of the surface area of at least one of the two surfaces has a distance to the opposite surface in the interval from D_{MIN} to D_{MIN} + 50 µm.

In one embodiment, at least 30% of the surface area of at least one of the two surfaces has a distance to the opposite surface in the interval from D_{MIN} to D_{MIN} + 50 µm.

In one embodiment, at least 40% of the surface area of at least one of the two surfaces has a distance to the opposite surface in the interval from D_{MIN} to D_{MIN} + 50 µm.

In one embodiment, at least 50% of the surface area of at least one of the two surfaces has a distance to the opposite surface in the interval from D_{MIN} to D_{MIN} + 50 µm.

In one embodiment, at least 60% of the surface area of at least one of the two surfaces has a distance to the opposite surface in the interval from D_{MIN} to D_{MIN} + 50 µm.

In one embodiment, at least 70% of the surface area of at least one of the two surfaces has a distance to the opposite surface in the interval from D_{MIN} to D_{MIN} + 50 µm.

In one embodiment, at least 80% of the surface area of at least one of the two surfaces has a distance to the opposite surface in the interval from D_{MIN} to D_{MIN} + 50 µm.

The two surfaces have at least partially a pattern of bars and grooves facing the suspension, i.e. the space between the surfaces where the liquid suspension is intended to flow. The bars are raised parts and the grooves are lower parts. The pattern of bars and grooves covers at least a part of the surface facing the suspension. Both surfaces facing the suspension are covered with bars and grooves. Such pattern serves to increase the shear exerted on the suspension. In one embodiment, the pattern of bars and grooves is positioned so that the grooves are transverse to the direction of rotation, where the surfaces are rotated relative to each other. In an alternative embodiment the grooves between the bars have an angle of 0° - 20° where 0° is a groove transverse to the direction of rotation. The distance between the top of the bars to the bottom of the grooves is adapted to the conditions and type of material to be treated to give suitable shear on the suspension. For optimum performance the grooves shall be shallow. In one embodiment, the distance between the bottom of the grooves and the top of the bars is in the range 0.1 - 10 mm, wherein the distance is measured in a direction along a surface normal centered on the bar. In a more preferred embodiment the distance between the bottom of the grooves and the top of the bars is in the range 1 - 5 mm. In an alternative embodiment the distance is 1 - 4 mm. The position of the surface normal is at the top of the bar. This gives a measure of the depth of the grooves and this depth is important for the occurrence of turbulence and shear on the suspension.

In one embodiment, at least one of the two surface facing the suspension have a surface roughness Ra measured according to ISO 4287:1997 of at least 5 µm. It has turned out that not only a pattern of bars and groove is important, also the surface roughness of the surface in contact with the suspension is of importance. A higher surface roughness gives higher shear force, which is desired.

In one embodiment, the suspension is circulated so that it is forced to flow in the space between the two surfaces which are moving relative to each. In one embodiment, the suspension is circulated 2-2000 times, preferably 7-800 times. One circulation is defined so that an average particle in the suspension will pass the space between the two surfaces once, i.e. the average flow in the system is adjusted to allow one circulation per particle in average. All particles circulating are calculated and when the number of particles that have circulated once equals the total number of particles in the system there has been one circulation.

In a typical setup a pump is pumping the suspension through the device so that it is circulated a number of times. In one embodiment, the two surface are arranged and have a pattern which is able to give a flow of the liquid. In such an embodiment the relative rotation between the two surfaces is able to create all or at least a part of the desired circulation of liquid. The bars and grooves may have for instance a spiral pattern creating a certain flow of the suspension.

In one embodiment the dwell time of the suspension in the space between the two surfaces which are moving relative to each other is in the interval 0.5 to 60 seconds.

In one embodiment, where graphite is used as starting material the concentration of graphite in the suspension is at least 5 wt%, preferably at least 10 wt%, more preferably at least 20 wt% and in some cases as high as 40 wt% or even higher.

In one embodiment, more starting material is added to the suspension as the fraction of exfoliated starting material in the suspension is increasing. When the starting material is subjected to shear smaller pieces of material are exfoliated and referred to as exfoliated starting material. In one specific example graphite is at least partially made into graphene. When the graphite is made into graphene more graphite can be added.

In one embodiment, a part of the suspension is removed as the fraction of exfoliated starting material in the suspension is increasing. The product, i.e. graphene can be removed with the liquid as graphene is produced. This can suitably be combined with addition of more starting material.

In one embodiment, the suspension is subjected to ultrasound either before, during or after the step B), or a combination thereof. In one embodiment, the suspension is subjected to ultrasound during step B). The ultrasound has the advantage of promoting the exfoliation of material. Ultrasound itself is known for graphene exfoliation. The ultrasonic waves create small vacuum bubbles or voids in the liquid. When the bubbles attain a volume at which they cannot longer absorb energy, they collapse violently, which is called cavitation. During the implosion high temperatures and pressures are reached very locally. The combination of ultrasound and shear force between the surfaces becomes particularly efficient.

In one embodiment, cavitation occurs in the suspension between the two surface. In one embodiment, the suspension is subjected to cavitation. In one embodiment, the cavitation is caused by any suitable means such as the shape of the moving surfaces in combination with the rotation speed or by ultrasound. In one embodiment, the cavitation is made in a separate step.

In one embodiment, the temperature is in the range 10-200 °C. In one embodiment, the pressure is in the range 10 mbar to 200 bar. Preferably, the temperature and pressure is selected so that the aqueous suspension still is a liquid. A skilled person can use a phase diagram for water and determine a suitable pressure for a desired temperature.

In a third aspect there is provided a two-dimensional material manufactured according to the method described above.

It is to be understood that this invention is not limited to the particular embodiments shown here. The embodiments and the following examples are provided for illustrative purposes and are not intended to limit the scope of the invention since the scope of the present invention is limited only by the appended claims.

## Claims

1. A device for manufacturing of a two-dimensional material, said device comprising two opposing surfaces adapted to moving relative to each other,
wherein the two surfaces are arranged so that there is a space between the two surfaces,
wherein at least one of the two surfaces comprise grooves and bars of a first type, on the surface(s) facing the space, wherein at least a part of the surface of the bars of the first type facing the space is provided with an abrasive surface, wherein 25-75 % of the area of the abrasive surface consists of protrusions wherein the protrusions have a height in the interval 10-30 um, where the height of the protrusions is measured as the height along a surface normal, wherein the abrasive surface has at least 600 protrusions per cm², wherein at least half of the grooves comprise at least one bar of a second type, where each bar of the second type extends across the groove.

2. The device according to claim 1, wherein the bars of the first type have a width of 5-20 mm measured as the shortest straight line from one edge of the bar to the other edge of the bar.

3. The device according to any one of claims 1-2, wherein at least a part of the bars of the first type are tapered.

4. The device according to any one of claims 1-3, wherein the distance between the bottom of the grooves and the top of the bars is in the range 0.1-10 mm, preferably 0.1-5 mm, wherein the distance is measured in a direction along a surface normal centered on the bar.

5. The device according to any one of claims 1-4, wherein each groove comprises at least three bars of the second type.

6. The device according to any one of claims 1-5, wherein bars of the second type in adjacent grooves are positioned so that there is at least 50 mm distance between the bars of the second type in adjacent grooves.

7. A method for manufacturing a two-dimensional material comprising the steps of:
A) mixing a starting material with a liquid to form a suspension,
B) forcing the suspension to flow in a space between two opposing surfaces, which two surfaces are moving relative to each other so that the suspension is subjected to a shear stress,
wherein the two surfaces comprise grooves and bars of a first type, on at least one of the surfaces facing the space,
wherein at least a part of the surface of the bars of the first type facing the space is provided with an abrasive surface, wherein 25-75 % of the area of the abrasive surface consists of protrusions wherein the protrusions have a height in the interval 10-30 um, where the height of the protrusions is measured as the height along a surface normal, wherein the abrasive surface has at least 600 protrusions per cm²,
wherein at least half of the grooves comprise at least one bar of a second type, where each bar of the second type extends across the groove.

8. The method according to claim 7, wherein the starting material comprises graphite and wherein the manufactured two-dimensional material is graphene.

9. The method according to claim 7, wherein the starting material comprises expanded graphite and wherein the manufactured two-dimensional material is graphene.

10. The method according to claim 7, wherein the starting material comprises oxidized graphite and wherein the manufactured two-dimensional material is graphene oxide.

11. The method according to any one of claims 7-10, wherein the two surfaces are shaped as two discs with a distance there between for the liquid mixture.

12. The method according to any one of claims 7-11, wherein the two surfaces are shaped as two concentric truncated cones with a distance there between for the liquid mixture.

13. The method according to any one of claims 7-12, wherein the suspension is circulated so that it is forced to flow several times through the space between the two surfaces which are moving relative to each other.

14. The method according to any one of claims 7-13, wherein the suspension is subjected to cavitation.

15. The method according to any one of claims 7-14, wherein at least 20% of the surface area of at least one of the two surfaces has a distance to the opposite surface in the interval from D_{MIN} to D_{MIN} + 50 um, wherein D_{MIN} is the minimum distance between the two surfaces, which are moving relative to each other measured at the point during movement where the distance is minimal.

## Patentansprüche

1. Eine Vorrichtung zum Herstellen eines zweidimensionalen Materials, wobei die Vorrichtung zwei gegenüberliegende Flächen umfasst, die für eine Bewegung relativ zueinander ausgelegt sind,
wobei die zwei Flächen so angeordnet sind, dass es einen Zwischenraum zwischen den zwei Flächen gibt,
wobei wenigstens eine der zwei Flächen Rillen und Streben eines ersten Typs auf der Oberfläche bzw. den Oberflächen, die zum Zwischenraum zeigen, umfasst,
wobei wenigstens ein Teil der Fläche der Streben des ersten Typs, die zum Zwischenraum zeigt, mit einer abrasiven Oberfläche versehen ist, wobei 25-75 % der Fläche der abrasiven Oberfläche aus Vorsprüngen bestehen, wobei die Vorsprünge eine Höhe im Intervall von 10-30 µm haben, wobei die Höhe der Vorsprünge als die Höhe längs einer Flächennormalen gemessen wird, wobei die abrasive Oberfläche wenigstens 600 Vorsprünge pro cm² hat,
wobei wenigstens die Hälfte der Rillen wenigstens eine Strebe eines zweiten Typs umfasst, wobei jede Strebe des zweiten Typs quer zur Rille verläuft.

2. Die Vorrichtung nach Anspruch 1, wobei die Streben des ersten Typs eine Breite von 5-20 mm als die kürzeste gerade Linie von einer Kante der Strebe zur anderen Kante der Strebe haben.

3. Die Vorrichtung nach einem der Ansprüche 1-2,
wobei wenigstens ein Teil der Streben des ersten Typs konisch zulaufen.

4. Die Vorrichtung nach einem der Ansprüche 1-3,
wobei der Abstand zwischen dem Boden der Rillen und der Oberseite der Streben im Bereich von 0,1-10 mm, vorzugsweise im Bereich von 0,1-5 mm liegt, wobei der Abstand in einer Richtung längs einer Flächennormalen, die auf der Strebe zentriert ist, gemessen wird.

5. Die Vorrichtung nach einem der Ansprüche 1-4,
wobei jede Rille wenigstens drei Streben des zweiten Typs umfasst.

6. Die Vorrichtung nach einem der Ansprüche 1-5,
wobei Streben des zweiten Typs in angrenzenden Rillen so positioniert sind, dass mindestens ein Abstand von 50 mm zwischen den Streben des zweiten Typs in angrenzenden Rillen besteht.

7. Ein Verfahren zum Herstellen eines zweidimensionalen Materials, das die folgenden Schritte umfasst:
A) Mischen eines Ausgangsmaterials mit einer Flüssigkeit, um eine Suspension zu bilden,
B) Drängen der Suspension, so dass sie in einen Zwischenraum zwischen zwei gegenüberliegenden Flächen strömt, wobei sich die zwei Flächen relativ zueinander bewegen, so dass die Suspension einer Scherbeanspruchung ausgesetzt ist,
wobei die zwei Flächen auf wenigstens einer der Flächen, die zum Zwischenraum zeigen, Rillen und Streben eines ersten Typs umfassen,
wobei wenigstens ein Teil der Oberfläche der Streben des ersten Typs, die zum Zwischenraum zeigen, mit einer abrasiven Oberfläche versehen ist, wobei 25-75 % der Fläche der abrasiven Oberfläche aus Vorsprüngen bestehen, wobei die Vorsprünge eine Höhe im Intervall von 10-30 µm haben, wobei die Höhe der Vorsprünge als Höhe längs einer Flächennormalen gemessen wird, wobei die abrasive Oberfläche wenigstens 600 Vorsprünge pro cm² hat,
wobei wenigstens die Hälfte der Rillen wenigstens eine Strebe eines zweiten Typs umfasst, wobei jede Strebe des zweiten Typs quer zur Rille verläuft.

8. Das Verfahren nach Anspruch 7, wobei das Ausgangsmaterial Graphit umfasst und wobei das hergestellte zweidimensionale Material Graphen ist.

9. Das Verfahren nach Anspruch 7, wobei das Ausgangsmaterial expandierten Graphit umfasst und wobei das hergestellte zweidimensionale Material Graphen ist.

10. Das Verfahren nach Anspruch 7, wobei das Ausgangsmaterial oxidierten Graphit umfasst und wobei das hergestellte zweidimensionale Material Graphenoxid ist.

11. Das Verfahren nach einem der Ansprüche 7-10, wobei die zwei Flächen als zwei Scheiben mit einem dazwischenliegenden Abstand für die Flüssigkeitsmischung ausgebildet sind.

12. Das Verfahren nach einem der Ansprüche 7-11, wobei die zwei Flächen als zwei konzentrische kegelstumpfförmige Konen mit einem dazwischenliegenden Abstand für die Flüssigkeitsmischung ausgebildet sind.

13. Das Verfahren nach einem der Ansprüche 7-12, wobei die Suspension umgewälzt wird, so dass sie zwangsweise mehrmals durch den Zwischenraum zwischen den zwei Flächen strömt, die sich relativ zueinander bewegen.

14. Das Verfahren nach einem der Ansprüche 7-13, wobei die Suspension Kavitation unterworfen ist.

15. Das Verfahren nach einem der Ansprüche 7-14, wobei wenigstens 20 % des Oberflächenbereichs wenigstens einer der zwei Flächen einen Abstand zur gegenüberliegenden Fläche im Intervall von D_{MIN} bis D_{MIN} + 50 µm haben, wobei D_{MIN} der minimale Abstand zwischen den zwei Flächen ist, die sich relativ zueinander bewegen, der zu dem Zeitpunkt während der Bewegung gemessen wird, zu dem der Abstand minimal ist.

## Revendications

1. Dispositif de fabrication d'une matière bidimensionnelle, ledit dispositif comprenant deux surfaces opposées adaptées pour se déplacer l'une par rapport à l'autre,
dans lequel les deux surfaces sont agencées de sorte qu'il existe un espace entre les deux surfaces,
dans lequel au moins l'une des deux surfaces comprend des rainures et des barres d'un premier type, sur la (les) surface(s) face à l'espace,
dans lequel au moins une partie de la surface des barres du premier type face à l'espace est dotée d'une surface abrasive, dans lequel 25 à 75 % de l'aire de la surface abrasive est constituée de saillies dans lequel les saillies ont une hauteur dans l'intervalle 10 à 30 µm, où la hauteur des saillies est mesurée en tant que hauteur le long d'une normale à la surface, dans lequel la surface abrasive a au moins 600 saillies par cm²,
dans lequel au moins la moitié des rainures comprennent au moins une barre d'un deuxième type, où chaque barre du deuxième type s'étend à travers la rainure.

2. Dispositif selon la revendication 1, dans lequel les barres du premier type ont une largeur de 5 à 20 mm mesurée en tant que la ligne droite la plus courte d'un bord de la barre à l'autre bord de la barre.

3. Dispositif selon l'une quelconque des revendications 1 et 2, dans lequel au moins une partie des barres du premier type sont effilées.

4. Dispositif selon l'une quelconque des revendications 1 à 3, dans lequel la distance entre la base des rainures et le sommet des barres est dans la plage 0,1 à 10 mm, de préférence 0,1 à 5 mm, dans lequel la distance est mesurée dans une direction le long d'une normale à la surface centrée sur la barre.

5. Dispositif selon l'une quelconque des revendications 1 à 4, dans lequel chaque rainure comprend au moins trois barres du deuxième type.

6. Dispositif selon l'une quelconque des revendications 1 à 5, dans lequel des barres du deuxième type dans des rainures adjacentes sont positionnées de sorte qu'il existe une distance d'au moins 50 mm entre les barres du deuxième type dans des rainures adjacentes.

7. Procédé de fabrication d'une matière bidimensionnelle comprenant les étapes consistant à :
A) mélanger une matière de départ avec un liquide pour former une suspension,
B) forcer la suspension à s'écouler dans un espace entre deux surfaces opposées, lesquelles deux surfaces se déplacent l'une par rapport à l'autre de sorte que la suspension est soumise à une contrainte de cisaillement,
dans lequel les deux surfaces comprennent des rainures et des barres d'un premier type, sur au moins l'une des surfaces face à l'espace,
dans lequel au moins une partie de la surface des barres du premier type face à l'espace est dotée d'une surface abrasive, dans lequel 25 à 75 % de l'aire de la surface abrasive est constituée de saillies dans lequel les saillies ont une hauteur dans l'intervalle 10 à 30 µm, où la hauteur des saillies est mesurée en tant que hauteur le long d'une normale à la surface, dans lequel la surface abrasive a au moins 600 saillies par cm²,
dans lequel au moins la moitié des rainures comprennent au moins une barre d'un deuxième type, où chaque barre du deuxième type s'étend à travers la rainure.

8. Procédé selon la revendication 7, dans lequel la matière de départ comprend du graphite et dans lequel la matière bidimensionnelle fabriquée est du graphène.

9. Procédé selon la revendication 7, dans lequel la matière de départ comprend du graphite expansé et dans lequel la matière bidimensionnelle fabriquée est du graphène.

10. Procédé selon la revendication 7, dans lequel la matière de départ comprend du graphite oxydé et dans lequel la matière bidimensionnelle fabriquée est de l'oxyde de graphène.

11. Procédé selon l'une quelconque des revendications 7 à 10, dans lequel les deux surfaces sont façonnées comme deux disques présentant une distance entre eux pour le mélange liquide.

12. Procédé selon l'une quelconque des revendications 7 à 11, dans lequel les deux surfaces sont façonnées comme deux cônes tronqués concentriques présentant une distance entre eux pour le mélange liquide.

13. Procédé selon l'une quelconque des revendications 7 à 12, dans lequel la suspension est mise en circulation de sorte qu'elle est forcée de s'écouler plusieurs fois à travers l'espace entre les deux surfaces qui se déplacent l'une par rapport à l'autre.

14. Procédé selon l'une quelconque des revendications 7 à 13, dans lequel la suspension est soumise à une cavitation.

15. Procédé selon l'une quelconque des revendications 7 à 14, dans lequel au moins 20 % de la surface d'au moins l'une des deux surfaces a une distance à la surface opposée dans l'intervalle de D_{MIN} à D_{MIN} + 50 µm, dans lequel D_{MIN} est la distance minimale entre les deux surfaces, qui se déplacent l'une par rapport à l'autre, mesurée au point pendant le mouvement où la distance est minimale.
